# EUROPEAN PATENT SPECIFICATION

(11) **EP 4 056 747 B1**
(45) Date of publication and mention of the grant of the patent: **26.02.2025**
(21) Application number: 20885670.8
(22) Date of filing: 13.10.2020
(51) Int. Cl.: D06F 37/24, D06F 37/12, F16F 15/36

(54) **WASHING MACHINE HAVING LOWER BALANCER**
WASCHMASCHINE MIT EINER UNTEREN AUSWUCHTVORRICHTUNG
MACHINE À LAVER AYANT UN DISPOSITIF D'ÉQUILIBRAGE INFÉRIEUR

(30) Priority: 05.11.2019 KR 20190140152
(43) Date of publication of application: 14.09.2022
(73) Proprietor: LG Electronics Inc., SEOUL 07336 (KR)
(72) Inventor: LEE, Changwon, Seoul 08592 (KR); KIM, Youngjong, Seoul 08592 (KR); YU, Insik, Seoul 08592 (KR)
(74) Representative: Vossius & Partner Patentanwälte Rechtsanwälte mbB
(86) International application number: PCT/KR2020/013921
(87) International publication number: WO 2021/091106

(56) References cited:
- WO-A1-2016/036216
- CN-A- 107 201 627
- JP-A- H08 323 091
- KR-A- 20110 012 365
- KR-A- 20110 051 017
- KR-A- 20150 052 454
- KR-A- 20160 029 517
- KR-A- 20160 029 518

## Description

### [Technical Field]

The present invention relates to a washing machine, and more particularly, to a washing machine which is a top loading washing machine capable of simplifying a number of parts and a manufacturing process by simplifying a fastening structure of a tub base, a lower balancer and a hub.

### [Background Art]

In general, a washing machine is a device that washes laundry using the emulsification effect of a detergent, the water flow action generated by the rotation of a washing tub or washing wings, the impacts applied by the washing wings, and the like, and performs a washing cycle, a rinsing cycle or a spin-drying cycle to remove contamination from the laundry using the action of detergent and water.

A washing machine is divided into a top loading type and a front loading type according to the position of an inlet to which laundry is put, the top loading washing machine has an inlet in a vertical direction, and the front loading washing machine has an inlet in a front-rear direction.

In general, a top loading washing machine includes an inner tub assembly including an outer tub to store wash water, a drum disposed inside the outer tub and loaded with laundry for washing, and a driving device disposed under the outer tub to rotate the drum.

On the other hand, upper and lower balancers are mounted on the upper and lower portions of the drum to reduce vibrations generated according to the eccentricity of laundry during washing, rinsing and spin-drying cycles.

A balancer can be divided into a fluid balancer and a ball balancer according to the type of a vibration reducing mass body, and recently, the fluid balancer is mainly used in consideration of transmission performance and noise generation.

In general, since a lower balancer is installed on the lower side of a drum, a means for fixing the lower balancer to the drum must be added.

In this regard, Korean Patent Laid-Open Publication No. 10-2015-0052454 discloses a top loading washing machine having a configuration in which a lower balancer is coupled and fastened to a hub member to which power is transmitted from a motor, thereby forming an assembly, and then the assembly is attached to a drum base member forming the lower portion of the drum using a separate fastening member.

However, the lower balance disclosed in the related document requires a fastening process of fixing the assembly for fastening the hub member and the lower balancer to the drum base member using a separate fastening member, in addition to the fastening member and the fastening process for fixing the lower balancer to the hub member.

Therefore, since the fastening means and fastening process for fastening the lower balancer to the lower portion of the drum are added, there is a problem in that overall manufacturing time and manufacturing cost of the washing machine are increased.

KR 2016 0029518 A and WO 2016/036216 A1 describe top load type washing machines according to the prior art.

The present invention has been devised to solve the above-described problems, and an object of the present invention is to provide a top loading washing machine capable of significantly reducing the manufacturing process and manufacturing cost by assembling a lower balancer using a fastening structure that connects an existing hub and tub base without adding a fastening member for fastening the lower balancer.

The invention is defined in the independent claim. Dependent claims describe preferred embodiments.

In order to achieve the above object, a washing machine according to the present invention includes a drum in which laundry is accommodated; a tub base which is fixed to a lower end of the drum; a lower balancer which is coupled to an outer circumferential surface of the tub base and reduces vibration generated when the drum rotates; a hub which is coupled to a lower outer surface of the tub base and is disposed radially inside the lower balancer; and at least one integrated fastening member which simultaneously fastens the tub

In addition, the integrated fastening member includes a fastening bolt which includes a head portion and a body portion integrally formed with the head portion and having a male thread on an outer circumferential surface thereof.

In addition, the tub base includes a disc portion having a through hole through which the body portion passes.

In addition, the tub base includes a reinforcement bead formed to protrude downwardly from the disk portion toward the hub, and a connection bead formed to additionally protrude downward from the reinforcement bead, the through hole is formed through the connection bead.

In addition, the lower balancer includes a fastening tab which extends radially inward and includes a connection hole, the connection bead is at least partially inserted into the connection hole.

In addition, the hub includes a fastening hole having a female thread screwed to the male thread of the body portion, in a state in which the connection bead is inserted into the connection hole, when the male thread of the body portion and the female thread of the fastening hole are screwed together, the head portion presses an upper surface of the connection bead so that a lower surface of the connection bead is in direct contact with an outer surface of the hub, so that the simultaneous fastening between the tub base, the lower balancer and the hub is completed.

In addition, a radially inner end of the fastening tap is provided with an inclined surface which is in contact with the lower surface of the connection bead, and corresponds to a shape of the lower surface of the connection bead.

In addition, the washing machine further includes a washer which is disposed between the head portion and the upper surface of the connection bead to prevent loosening of the fastening bolt.

In addition, the reinforcement bead is formed to protrude to a first depth from the disk portion, the connection bead is formed to protrude to a second depth from the reinforcement bead, the second depth is smaller than the first depth.

In addition, in a state in which the simultaneous fastening between the tub base, the lower balancer and the hub is completed, a height from an upper bottom surface of the connection bead to an upper surface of the head portion is smaller than a sum of the first depth and the second depth.

In addition, in a state in which the simultaneous fastening between the tub base, the lower balancer and the hub is completed, a height from an upper bottom surface of the connection bead to an upper surface of the head portion is smaller than the first depth.

In addition, a length of the head portion in a longitudinal direction of the fastening bolt is smaller than the second depth.

In addition, the head portion is in direct contact with the upper bottom surface of the connection bead.

In addition, the washing machine further includes an upper balancer fixed to an upper end of the drum, and the upper balancer and the lower balancer are fluid balancers.

### [Advantageous Effects]

The washing machine according to the present invention has an effect of significantly reducing manufacturing process and manufacturing cost by assembling the lower balancer using a fastening structure for fastening the existing hub and the tub base without adding a fastening member for fastening the lower balancer.

### [Description of Drawings]

FIG. 1 is a perspective view of a washing machine according to the present invention.
FIG. 2 is a front cross-sectional view of an inner tub assembly of a washing machine according to the present invention.
FIG. 3 is a perspective view illustrating a state in which a tub base, a lower balancer and a hub of the inner tub assembly shown in FIG. 2 are assembled.
FIG. 4 is an exploded perspective view of FIG. 3.
FIG. 5 is a partial cross-sectional view of FIG. 4

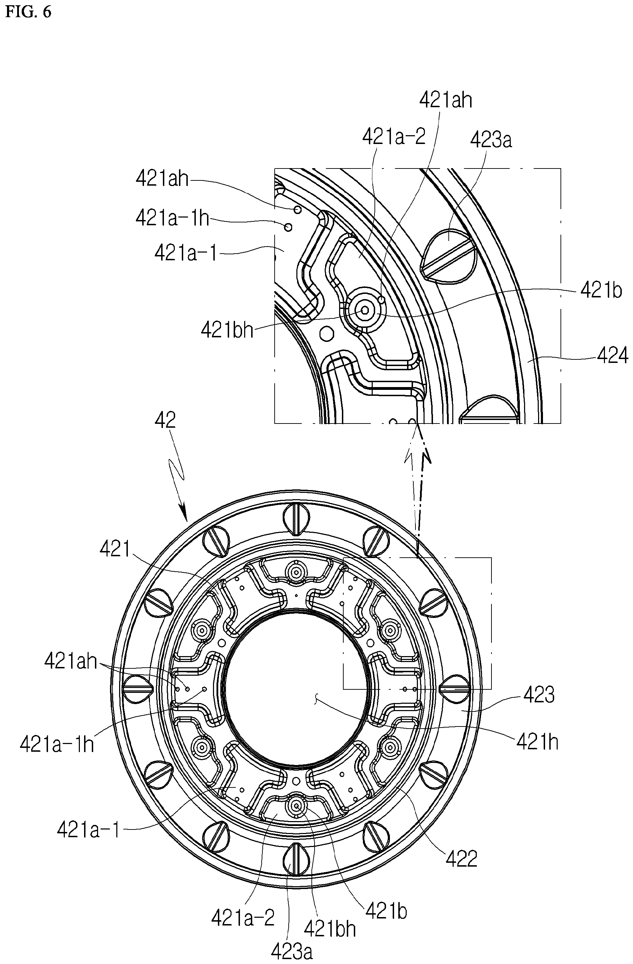

FIG. 6 is a plan view and a partially enlarged view of a tub base.
FIGS. 7 and 8 are partial cross-sectional views of FIG. 6.
FIG. 9 is a bottom view for explaining a state in which a tub base and a lower balancer are assembled.
FIG. 10 is a plan view and a partially enlarged view of a lower balancer.
FIG. 11 is a plan view of a hub.

### [Best Mode]

Hereinafter, preferred embodiments of the present invention will be described in detail with reference to the accompanying drawings.

Since the present invention can have various changes and can have various embodiments, specific embodiments are illustrated in the drawings and will be described in detail in the detailed description. This is not intended to limit the present invention to specific embodiments, and should be construed to include all modifications, equivalents, and substitutes included in the spirit and scope of the present invention.

In describing the present invention, terms such as first and second may be used to describe various components, but the components may not be limited by the terms. The above terms are only for the purpose of distinguishing one component from another. For example, without departing from the scope of the present invention, a first component may be referred to as a second component, and similarly, a second component may also be referred to as a first component.

The term "and/or" may include a combination of a plurality of related listed items or any of a plurality of related listed items.

When a component is referred to as being "connected" or "contacted" to another component, it can be understood that it may be directly connected or contacted to the other component, but other components may exist in between. On the other hand, when a component is referred to as being "directly connected" or "directly contacted" to another component, it may be understood that another component does not exist in the middle.

The terms used in the present application are only used to describe specific embodiments, and are not intended to limit the present invention. The singular expression may include the plural expression unless the context clearly dictates otherwise.

In the present application, terms such as "comprise" or "have" are intended to designate that a feature, number, step, operation, component, part, or combination thereof described in the specification exists, and it may be understood that the existence or addition of one or more other features, numbers, steps, operations, components, parts, or combinations thereof is not precluded in advance.

Unless defined otherwise, all terms used herein, including technical or scientific terms, may have the same meaning as commonly understood by one of ordinary skill in the art to which this invention belongs. Terms such as those defined in a commonly used dictionary may be interpreted as having a meaning consistent with the meaning in the context of the related art, and unless explicitly defined in the present application, it may not be interpreted in an ideal or excessively formal meaning.

In addition, the following embodiments are provided to more completely explain to those of ordinary skill in the art, and the shapes and sizes of elements in the drawings may be exaggerated for clearer explanation.

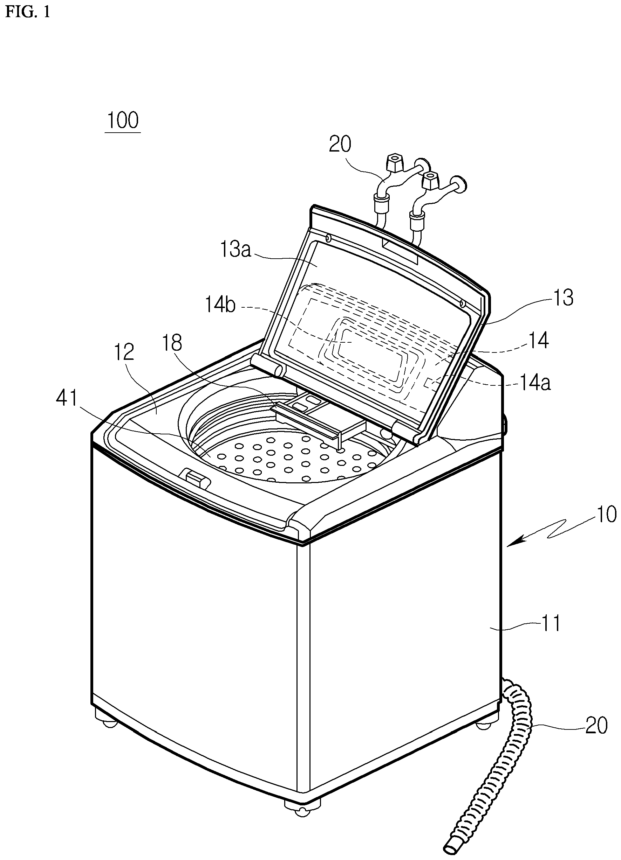

FIG. 1 is a perspective view of a washing machine 100 according to the present invention. Referring to FIG. 1, a washing machine 100 according to an embodiment of the present invention includes a casing 10 which forms an exterior, an outer tub (not shown) which is disposed inside the casing 10 to store wash water, an inner tub assembly 40 which is disposed inside the outer tub and includes a drum 41 to receive laundry for washing, a driving unit (not shown) which is mounted on the outer tub and rotates the drum 41, and a water supply unit (not shown) and a drain unit (not shown) which supply and drain the wash water.

The casing 10 includes a top cover 12 which has an inlet on the upper side thereof so that laundry can be put in in a vertical direction, a cabinet 11 which is connected to the top cover 12, and in which the outer tub, the inner tub assembly 40 and the driving unit are installed, and a door 13 which is installed on the top cover 12 and opens and closes the inlet.

A transparent window 13a is disposed on the door 13 so that the inside of the drum 41 can be observed.

A control panel 14 is installed on the top cover 12. The control panel 14 includes an input unit 14a to which a control command for controlling the operation of the washing machine 100 is input from a user, and a display unit 14b to notify the user of the operating state of the washing machine 100.

The input unit 14a may be a button, a dial, a touch pad and the like, and the display unit 14b may be an LCD or LED display device.

In addition, the top cover 12 is provided with a drawer housing (not shown) which removably accommodates a drawer 18 in which detergent to be put during the washing and rinsing cycles is stored.

The inside of the drawer 18 is partitioned into a plurality of spaces to store detergents by type. Therefore, laundry detergent, fabric softener, bleach and the like may be separately stored in the plurality of partitioned spaces without mixing with each other.

The water supply unit includes a water supply pipe, a water supply valve and a dispenser.

The water supply pipe guides the wash water supplied to the inside of the washing machine 100 from an external water supply source 20 such as a faucet.

The water supply valve controls the supply of wash water by opening and closing the water supply pipe.

Meanwhile, the wash water passing through the control valve is selectively distributed for each space partitioned in the drawer 18 through the dispenser. The wash water distributed through the dispenser is mixed with detergent through the drawer 18 and then supplied to the outer tub.

The drain unit includes a drain pipe (not shown), a drain valve (not shown) and a drain pump (not shown).

The drain pipe is connected to the outer tub to discharge wash water to the outside, and the drain valve opens and closes the drain pipe to control the discharge of wash water.

The wash water discharged when the drain valve is opened is pressurized by the drain pump and discharged to the outside through a drain hose 30.

The driving unit may include an electric motor (not shown), a reduction mechanism (not shown) and a driving shaft (not shown), and is fixed to the lower surface of the outer tub.

The driving motor provides a driving force for rotations of the drum 41 and a pulsator 50, and an outer rotor type BLDC motor is preferable.

The detailed configuration of the driving motor is omitted because a technique generally known in the art is applicable.

The reduction mechanism serves to convert the rotational force of the driving motor into two outputs rotated in opposite directions, and a planetary gear assembly is preferable.

The rotational force reduced through the planetary gear assembly is transmitted to the driving shaft.

The driving shaft includes a dual shaft structure having an inner shaft (not shown) and an outer shaft (not shown). One end of the inner shaft extends through the outer shaft and the tub base 42 and is coupled to the pulsator 50, and the other end of the inner shaft extends downward and is connected to the reduction mechanism.

The outer shaft is manufactured in a tubular shape with a hollow, and the inner shaft is inserted into the hollow. The outer shaft passes through the lower side of the outer tub and is coupled to the spline boss 451a of the hub 45.

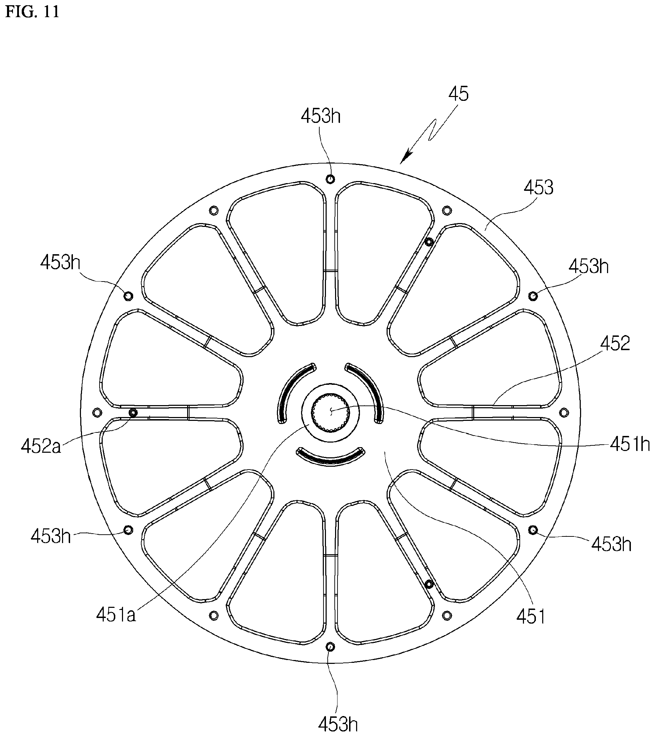

In order to transmit a driving force to the hub 45 through the outer shaft, the outer shaft and the hub 45 may be spline-coupled. To this end, teeth (FIG. 11) are formed on the inner peripheral surface of the spline boss 451a.

Therefore, the driving motor can selectively drive at least one of the drum 41 and the pulsator 50 or simultaneously drive the drum 41 and the pulsator 50 through the inner shaft and the outer shaft, and such selective driving and simultaneous driving are techniques generally known in the art. Thus, detailed description is omitted.

The outer tub stores the wash water and is supported by the cabinet 11 through a suspension module (not shown). The suspension module cushions the transmitted vibration or shock generated by the outer tub.

The inner tub assembly 40 is disposed inside the outer tub, and may be rotated in a forward or reverse direction by a rotational force transmitted from the driving unit.

Hereinafter, an assembly including the drum 41, an upper balancer 43, a tub base 42, a lower balancer 44, and a hub 45 will be defined as the inner tub assembly 40 and will be described in detail.

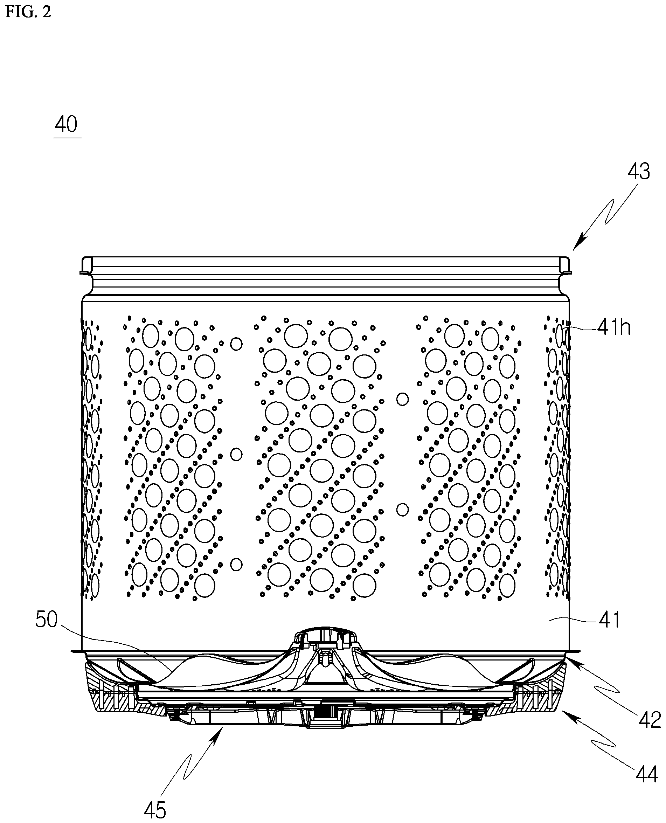

Referring to FIGS. 2 to 5, the inner tub assembly 40 according to an embodiment of the present invention is configured to include the drum 41, the upper balancer 43 provided at the upper end of the drum 41, the tub base 42 fixed to the lower end of the drum 41, the lower balancer 44 coupled to the outside of the tub base 42, the hub 45 fixed to the lower surface of the tub base 42 and an integrated fastening member to fasten the tub base 42, the lower balancer 44 and the hub 45 each other at the same time.

The drum 41 may be manufactured by processing a lightweight metal plate, preferably an aluminum plate, into a cylindrical shape, and it includes a plurality of through holes 41h.

The wash water flows into the drum 41 from the outer tub through the plurality of through holes 41h, or the wash water is discharged from the drum 41 to the outer tub.

The tub base 42 corresponds to a portion fixed to the lower end of the drum 41 and may be manufactured by press-processing of a metal plate.

As shown, the tub base 42 is configured to include a disk portion 421, a step portion 422 and an enlarged diameter portion 423.

The disk portion 421 is formed in a ring shape with a center hole 421h in the center. The wash water is discharged through the center hole 421h, and the above-described driving shaft extends therethrough.

A plurality of reinforcement beads 421a-1, 421a-2 is formed in the disk portion 421 through press-processing. The plurality of reinforcement beads 421a-1, 421a-2 serves to reinforce the rigidity of the disk portion 421 and is formed to protrude downward.

When the reinforcement beads 421a-1, 421a-2 are formed in the upper direction of the disk portion 421, the laundry accommodation space formed by the tub base 42 and the drum 41 is reduced, and accordingly, the washing capacity of the washing machine 100 may be limited. Therefore, it is preferable to form the reinforcement beads 421a-1, 421a-2 to protrude downward so that the washing capacity of the washing machine 100 is not limited.

In addition, since these reinforcement beads 421a-1, 421a-2 protrude downward, the washing water may be accumulated. Therefore, in order to prevent the washing water from accumulating, a drain hole 421ah is formed in the individual reinforcement beads 421a-1, 421a-2.

On the other hand, at least one of the reinforcement beads 421a-1 and 421a-2 is formed with a connection bead 421b that is formed to further protrude downward from the reinforcement bead 421a-2.

The connection bead 421b acts as a locking portion that is at least partially inserted into the connection hole 442bh formed in the fastening tab 442b of the lower balancer 44 to be described later.

Based on the illustrated embodiment, a total of six connection beads 421b are formed at equal intervals. Although the present invention is not limited thereto, it will be described based on a configuration in which a total of six connection beads 421b are formed at equal intervals by way of example.

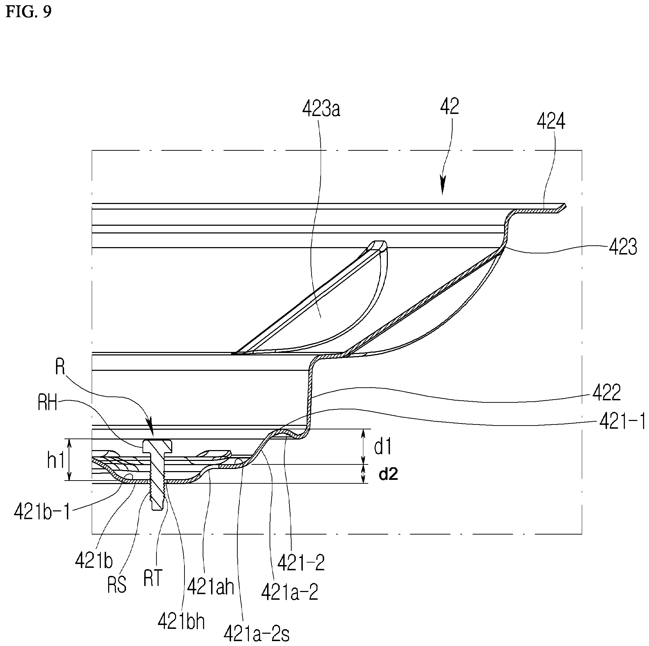

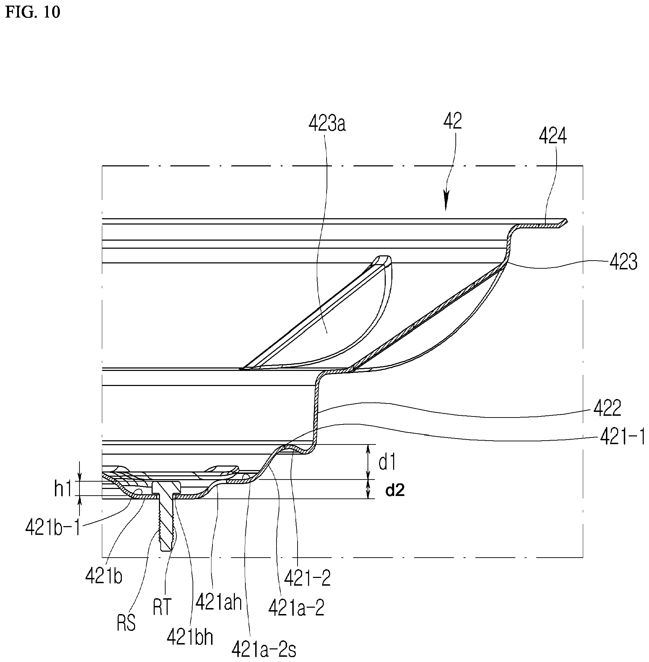

As shown in FIGS. 9 and 10, the reinforcement bead 421a-2 may protrude from the upper bottom surface 421-1 of the disk portion 421 to have a first depth (d1), and the connection bead 421b may protrude from the upper bottom surface 421a-2s of the reinforcement bead 421a-2 to have a second depth (d2).

The first depth (d1) and the second depth (d2) may be the same or different from each other.

In more detail, it is preferable that the second depth (d2) is smaller than the first depth (d1).

This is because, when the second depth (d2) exceeds the first depth (d1), the height of the inner tub assembly 40 is additionally increased, which is not preferable.

The relationship between the first depth (d1) of the reinforcement bead 421a-2 and the second depth (d2) of the connection bead 421b may be further specified with respect to the height of the head portion (RH) of the fastening bolt (R) as an integrated fastening member to be described later. Details will be described later.

On the other hand, the through hole 421bh is formed in the individual connection beads 421b. The body portion (RS) of the fastening bolt (R) passes through the through hole 421bh.

The step portion 422 is a portion formed by press-processing so as to be bent upward from the disk portion 421, and is integrally formed with the disk portion 421.

As shown in FIG. 2, the step portion 422 internally forms a mounting space for at least partially accommodating the pulsator 50 together with the disk portion 421.

In addition, the step portion 422 externally comes into contact with the locking protrusion 442a of the lower balancer 44 to be described later. Accordingly, the contact area between the tub base 42 and the lower balancer 44 may be increased.

Through this, the load transferred from the tub base 42 to the lower balancer 44 is distributed to prevent the lower balancer 44 from being damaged.

The enlarged diameter portion 423 is a portion in which the inner diameter is expanded and extended from the upper end of the step portion 422.

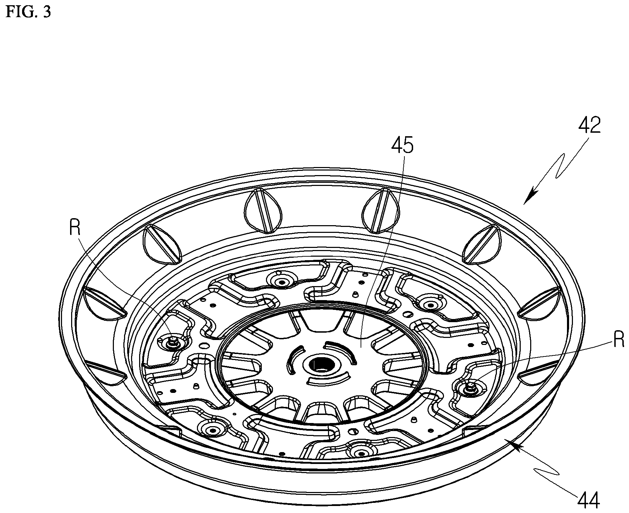

In more detail, as shown in FIGS. 3 to 5, the enlarged diameter portion 423 is a portion expanded from the upper end of the step portion 422, and is formed of inner and outer surfaces having a predetermined curvature, and a downwardly convex curved surface.

The enlarged diameter portion 423 is integrally formed with the step portion 422 through press-processing.

A reinforcement bead 423a may be formed in the enlarged diameter portion 423 similarly to a flat plate portion. The reinforcement bead 423a of the enlarged diameter portion 423 is formed to protrude toward the inside of the drum 41 in an upward direction, unlike the reinforcement beads 421a-1, 421a-2 of the flat plate portion. This is to reinforce the strength of the enlarged diameter part 423 and at the same time, to form a water flow when the inner tub assembly 40 rotates.

The upper end of the enlarged diameter portion 423 forms a coupling portion 424 which is firmly fixed to the lower end of the drum 41 by welding and curling.

On the other hand, the outer surface of the enlarged diameter portion 423 forms a space in which the lower balancer 44 is mounted.

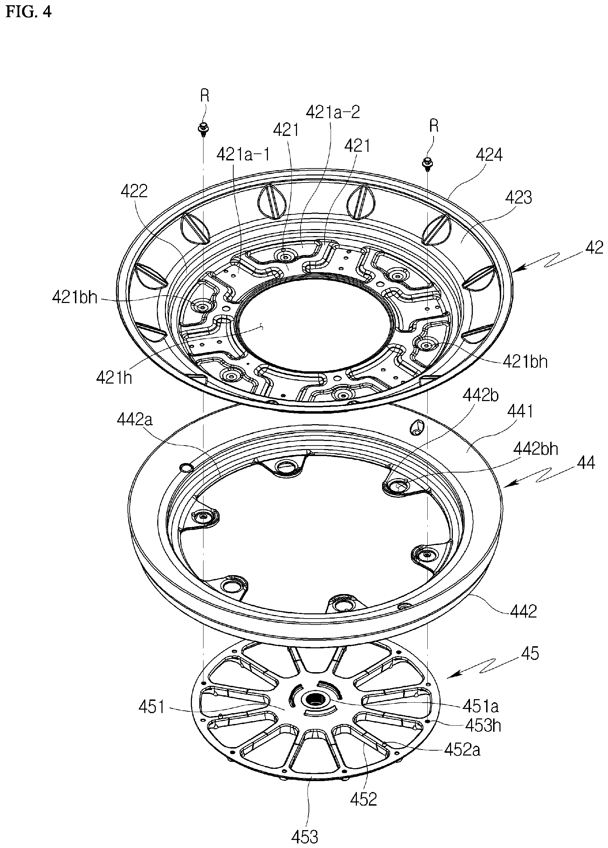

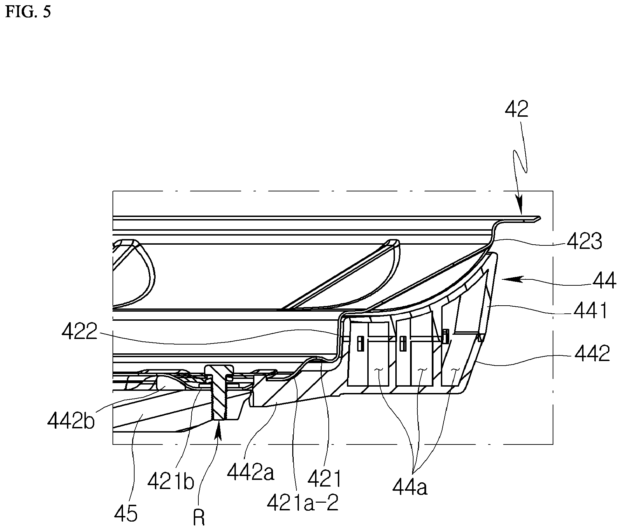

As shown in FIGS. 4 and 5, the lower balancer 44 is coupled to the tub base 42 in a simple fitting manner while moving upward in a space having a shape defined by the step portion 422 and the enlarged diameter portion 423.

Therefore, through such a simple fitting coupling, the temporary assembly state can be maintained without the use of a separate jig until the hub 45 to be described later is fastened to the lower surface of the tub base 42.

Meanwhile, the upper balancer 43 and the lower balancer 44, as fluid balancers, serve to reduce the vibrations generated when the inner tub assembly 40 rotates.

At least one annular cavity 44a defining a movement path of the liquid moving according to the eccentricity of the inner tub assembly 40 is formed in the upper balancer 43 and the lower balancer 44 for vibration reduction.

The upper balancer 43 may be fixed to the upper end of the drum 41 as a way already known in the art, and thus, a detailed description thereof will be omitted.

On the other hand, the illustrated embodiment shows the lower balancer 44 which includes an annular cavity 44a having a first cavity, a second cavity and a third cavity. However, this is merely exemplary, and the number and shape of the annular cavity 44a may be variously modified and applied. For convenience, the following description is based on the illustrated embodiment.

The lower balancer 44 includes a first annular housing 441 corresponding to the upper housing and a second annular housing 442 corresponding to the lower housing.

The above-described annular cavity 44a is formed by the internal structure defined by the first housing 441 and the second housing 442.

The first housing 441 and the second housing 442 have an outer shape corresponding to a shape defined by the step portion 422 and enlarged diameter portion 423 of the tub base 42 described above.

More specifically, as shown in FIGS. 4 and 5, the upper outer surface and radially inner outer surface of the first housing 441 are configured to have shapes corresponding to the outer surface shape of the enlarged diameter portion 423 and the outer surface shape of the step portion 422 of the tub base 42.

In addition, the radially inner outer surface of the second housing 442 is configured to have a shape corresponding to the outer surface shape of the step portion 422.

Through the outer surface shapes of the first housing 441 and second housing 442 of the lower balancer 44, a simple fit coupling structure between the lower balancer 44 and the tub assembly as described above can be achieved.

Meanwhile, the second housing 442 includes an annular locking protrusion 442a extending from the radially inner outer surface toward the radially inner side.

The annular locking protrusion 442a is a portion formed integrally protruding from the second housing 442, and serves to reinforce the strength of the lower balancer 44.

The amount of protrusion of the annular locking protrusion 442a may be limited to a range not in contact with the reinforcement beads 421a-1, 421a-2 in order to prevent interference with the reinforcement beads 421a-1, 421a-2 of the tub base 42 described above.

In addition, as described above, the annular locking protrusion 442a is in direct contact with the lower bottom surface 421-2 of the disk portion 421 of the tub base 42.

Therefore, the contact area between the tub base 42 and the lower balancer 44 can be increased, and through this, the load transferred from the tub base 42 to the lower balancer 44 is distributed to prevent the lower balancer 44 from being damaged.

On the other hand, the fastening tab 442b is integrally provided at the radially inner end of the annular locking protrusion 442a.

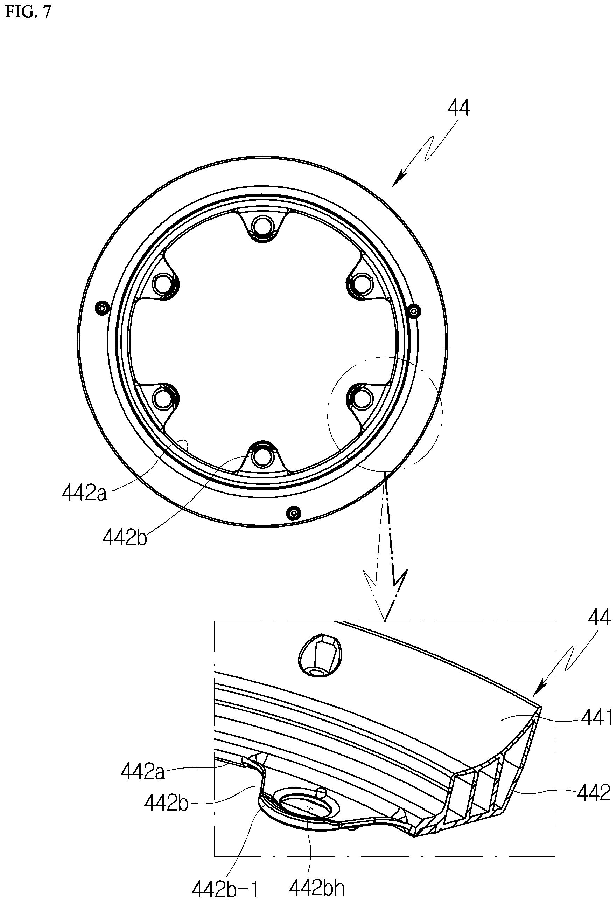

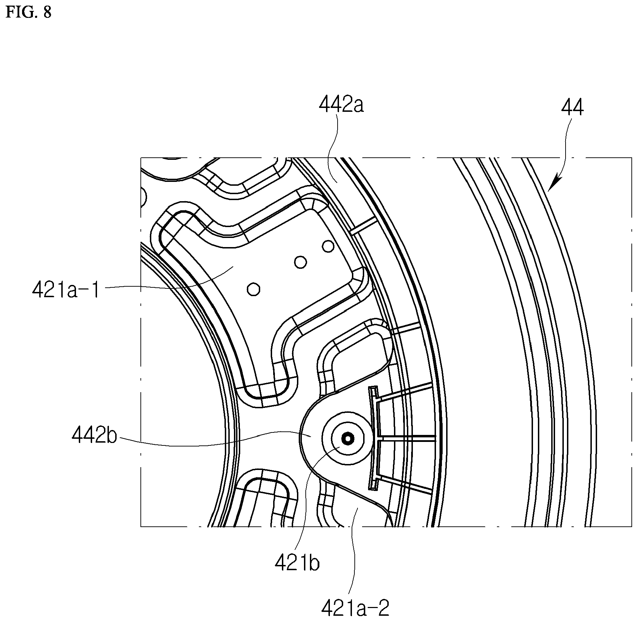

As shown in FIGS. 7 and 8, the fastening tab 442b of the lower balancer 44 is formed to protrude radially inward from the inner end of the annular locking protrusion 442a.

The fastening tab 442b may have a shape in which the width gradually decreases while facing the radially inward as illustrated in order to reduce weight and cost.

The fastening tab 442b is provided with a connection hole 442bh through which the aforementioned connection bead 421b can pass at least partially.

Therefore, when the fastening of the hub 45 to be described later is completed, the connection bead 421b penetrates the connection hole 442bh of the fastening tab 442b and is in close contact with the upper surface of the annular flange 453 of the hub 45.

Meanwhile, the radially inner end of the fastening tab 442b is formed to have a predetermined inclined surface 442b-1. The inclined surface 442b-1 of the fastening tab 442b has a shape corresponding to the lower outer shape of the connection bead 421b as shown in FIG. 5. Accordingly, the contact area between the fastening tab 442b and the connection bead 421b of the tub base 42 is enlarged, so that there is an effect of dispersing the load transferred from the tub base 42 to the fastening tab 442b.

When the connection bead 421b of the tub base 42 is inserted into the connection hole 442bh of the fastening tab 442b, the temporary assembly between the tub base 42 and the lower balancer 44 is completed.

When the temporary assembly is completed, the hub 45 is coupled to the lower outer surface of the tub base 42.

As described above, the tub base 42, the lower balancer 44 and the hub 45 of the washing machine 100 according to the embodiment of the present invention are simultaneously fastened through at least one integrated fastening member.

The integrated fastening member may be a fastening bolt (R) which includes a head portion (RH), a body portion (RS) extending in a longitudinal direction from the head portion (RH), and a male screw portion (RT) formed at least partially on an outer circumferential surface of the body portion (RS).

Although the present invention is not limited thereto, it will be described based on an embodiment in which the fastening bolt (R) is applied as an integrated fastening member as illustrated.

As shown in FIG. 4, the hub 45 is coupled to the lower surface of the tub base 42 in a state where the tub base 42 and the lower balancer 44 are temporarily assembled.

When the hub 45 is coupled, the through hole 421bh of the connection bead 421b of the tub base 42, the connection hole 442bh of the fastening tab 442b of the lower balancer 44 and the fastening hole 453h of the hub 45 are all concentric.

In this case, the body portion (RS) of the fastening bolt (R) is moved downward to extend to the fastening hole 453h through the through hole 421bh and the connection hole 442bh.

The male screw portion (RT) formed on the body portion (RS) of the fastening bolt (R) may be screwed to a female screw portion formed on the inner circumferential surface of the fastening hole 453h of the hub 45 or may be coupled to a separate nut member.

In the illustrated embodiment, there is shown a structure for screwing to the female screw portion formed on the inner circumferential surface of the fastening hole 453h of the hub 45, but the present invention is not limited thereto, but will be described based on the illustrated embodiment.

As the male thread portion (RT) of the fastening bolt (R) is screwed to the female thread portion of the hub 45, the fastening bolt (R) moves while rotating in the downward direction, and the head portion (RH) of the fastening bolt (R) presses the upper bottom surface 421b-1 of the connection bead 421b, thereby bring the connection bead 421b into close contact with the upper surface of the hub 45.

As such, when the fastening bolt (R) is screwed into the fastening hole 453h of the hub 45, as shown in FIG. 5, the simultaneous fastening structure of the tub base 42, the lower balancer 44 and the hub 45 through the single fastening bolt (R) is completed.

Meanwhile, at least one washer may be disposed between the head portion (RH) of the fastening bolt (R) and the upper bottom surface 421b-1 of the connection bead 421b. FIG. 5 shows an embodiment in which a flat washer and a plate washer are simultaneously applied. It is possible to prevent loosening of the screw connection between the fastening bolt (R) and the hub 45 through these washers.

In a structure in which the fastening bolt (R) is screwed with a nut, these washers may be configured to be disposed on the nut side.

FIG. 4 shows an embodiment in which a total of two fastening bolts (Rs) are provided, but the present invention is not limited thereto, and various modifications are possible according to the required coupling strength. In particular, the number of fastening bolts (Rs) is adjustable within a quantity range that maximizes the number of fastening tabs 442b of the lower balancer 44.

Meanwhile, as described above, the height (h1) of the head portion (RH) of the fastening bolt (R) may be additionally specified in relation to the first depth (d1) of the reinforcement bead 421a-2 and the second depth (d2) of the connection bead 421b.

First, as in the embodiment shown in FIG. 9, in a state in which simultaneous fastening between the tub base 42, the lower balancer 44 and the hub 45 is completed, the height (h1) from the upper bottom surface 421b-1 of the connection bead 421b to the upper surface of the head portion (RH) of the fastening bolt (R) is set smaller than the sum of the first depth (d1) of the reinforcement bead 421a-2 and the second depth (d2) of the connection bead 421b.

As such, by limiting the height (h1) of the head portion (RH) of the fastening bolt (R), it is possible to prevent interference with the pulsator 50 disposed on the fastening bolt (R).

Further, as in the embodiment shown in FIG. 10, in a state in which the simultaneous fastening between the tub base 42, the lower balancer 44 and the hub 45 is completed, the height (h1) from the upper bottom surface 421b-1 of the connection bead 421b to the upper surface of the head portion (RH) of the fastening bolt (R) is set to be smaller than the second depth (d2) of the connection bead 421b.

This may be defined as a state in which the head portion (RH) of the fastening bolt (R) is in direct contact with the upper bottom surface 421b-1 of the connection bead 421b, and in this case, the height (h1) of the head portion (RH) may be the same number as the length of the head portion (RH) in the longitudinal direction of the fastening bolt (R).

In this way, by further limiting the height (h1) or the length of the head portion (RH) of the fastening bolt (R), the height (h1) from the upper bottom surface 241b-1 of the connection bead 421b to the head portion (RH) of the fastening bolt (R) can be minimized. Accordingly, the height of the step portion 422 of the tub base 42 can be minimized, and the overall height size of the inner tub assembly 40 can be reduced. unit, and is fixed to the lower outer surface of the tub base 42 through the fastening bolt (R).

A plurality of fastening holes 453h through which the fastening bolt (R) passes is formed in the annular flange 453 of the hub 45, and a female screw portion may be formed on the inner circumferential surface of the fastening hole 453h.

The inner surface of the annular flange 453 is connected to the central portion 451 through a plurality of spokes 452.

A connection protrusion 452a protruding upwardly is formed in some of the plurality of spokes 452. The connection protrusion 452a is inserted into the locking hole 421a-1h formed in the reinforcement bead 421a-1 of the tub base 42. The rotational force transmitted from the hub 45 to the tub base 42 through the connection protrusion 452a may be distributed without being concentrated on the fastening bolt (R).

The above-described spline boss 451a is formed in the central portion 451, and a spline hole 451h for spline coupling is formed on the inner circumferential surface of the spline boss 451a.

The teeth of the spline hole 451h are joined to the spline teeth formed on the outer shaft of the driving unit to form a spline coupling.

Since a technique generally known in the art is applicable to other detailed configuration of the hub 45, a detailed description thereof will be omitted.

## Claims

1. A washing machine (100) comprising:
a drum (41) in which laundry is accommodated;
a tub base (42) which is fixed to a lower end of the drum (41);
a lower balancer (44) which is coupled to an outer circumferential surface of the tub base (42) and is configured to reduce vibration generated when the drum (41) rotates;
a hub (45) which is coupled to a lower outer surface of the tub base (42) and is disposed radially inside the lower balancer (44); and
at least one integrated fastening member which is configured to simultaneously fasten the tub base (42), the lower balancer (44) and the hub (45) to each other;
wherein the integrated fastening member includes a fastening bolt (R) which includes a head portion (RH) and a body portion (RS) integrally formed with the head portion (RH) and having a male thread on an outer circumferential surface thereof;
wherein the tub base (42) includes a disk portion (421) having a through hole (421bh) through which the body portion (RS) passes; and.
wherein the tub base (42) includes a reinforcement bead (421a-1, 421a-2) formed to protrude downwardly from the disk portion (421) toward the hub (45), and a connection bead (421b) formed to additionally protrude downward from the reinforcement bead (421a-1, 421a-2), and
the through hole (421bh) is formed through the connection bead (421b);
wherein the lower balancer (44) includes a fastening tab (442b) which extends radially inwardly and includes a connection hole (442bh), the connection bead (421b) is at least partially inserted into the connection hole (442bh).

2. The washing machine (100) according to claim 1, wherein the hub (45) includes a fastening hole (453h) having a female thread screwed to the male thread of the body portion (RS),
in a state in which the connection bead (421b) is inserted into the connection hole (442bh), when the male thread of the body portion (RS) and the female thread of the fastening hole (453h) are screwed together, the head portion (RH) is configured to press an upper surface of the connection bead (421b) so that a lower surface of the connection bead (421b) is in direct contact with an outer surface of the hub (45), so that the simultaneous fastening between the tub base (42), the lower balancer (44) and the hub (45) is completed.

3. The washing machine (100) according to claim 2, wherein a radially inner end of the fastening tab (442b) is provided with an inclined surface which is in contact with the lower surface of the connection bead (421b), and corresponds to a shape of the lower surface of the connection bead (421b).

4. The washing machine (100) according to claim 2, further comprising a washer which is disposed between the head portion (RH) and the upper surface of the connection bead (421b) to prevent loosening of the fastening bolt (R).

5. The washing machine (100) according to claim 2, wherein the reinforcement bead (421a-1, 421a-2) is formed to protrude to a first depth (d1) from the disk portion (421),
the connection bead (421b) is formed to protrude to a second depth (d2) from the reinforcement bead (421a-1, 421a-2),
the second depth (d2) is smaller than the first depth (d1).

6. The washing machine (100) according to claim 5, wherein in a state in which the simultaneous fastening between the tub base (42), the lower balancer (44) and the hub (45) is completed, a height (h1) from an upper bottom surface of the connection bead (421b) to an upper surface of the head portion (RH) is smaller than a sum of the first depth (d1) and the second depth (d2).

7. The washing machine (100) according to claim 5, wherein in a state in which the simultaneous fastening between the tub base (42), the lower balancer (44) and the hub (45) is completed, a height (h1) from an upper bottom surface of the connection bead (421b) to an upper surface of the head portion (RH) is smaller than the first depth (d1).

8. The washing machine (100) according to claim 5, wherein a length of the head portion (RH) in a longitudinal direction of the fastening bolt (R) is smaller than the second depth (d2).

9. The washing machine (100) according to claim 7 or 8, wherein the head portion (RH) is in direct contact with the upper bottom surface of the connection bead (421b).

10. The washing machine (100) according to claim 1, further comprising an upper balancer (43) fixed to an upper end of the drum (41),
wherein the upper balancer (43) and the lower balancer (44) are fluid balancers.

## Patentansprüche

1. Waschmaschine (100), umfassend:
eine Trommel (41) zum Aufnehmen von Wäsche;
eine Wannenbasis (42), die an ein unteres Ende der Trommel (41) befestigt ist;
eine untere Ausgleichsvorrichtung (44), die mit einer Außenumfangsfläche der Wannenbasis (42) gekoppelt und dazu ausgelegt ist, die bei Drehung der Trommel (41) erzeugten Schwingungen zu reduzieren;
eine Nabe (45), die mit einer unteren Außenfläche der Wannenbasis (42) gekoppelt und radial innerhalb der unteren Ausgleichsvorrichtung (44) angeordnet ist; und
zumindest ein integriertes Befestigungselement, das dazu ausgelegt ist, zugleich die Wannenbasis (42), die untere Ausgleichsvorrichtung (44) und die Nabe (45) aneinander zu befestigen;
wobei das integrierte Befestigungselement einen Befestigungsbolzen (R) enthält, der einen Kopfabschnitt (RH) und einen Körperabschnitt (RS) umfasst, der einstückig mit dem Kopfabschnitt (RH) ausgebildet ist und ein Außengewinde an einer Außenumfangsfläche desselben aufweist;
wobei die Wannenbasis (42) einen Scheibenabschnitt (421) mit einem Durchgangsloch (421bh) aufweist, durch das der Körperabschnitt (RS) hindurchtritt; und
wobei die Wannenbasis (42) einen Verstärkungswulst (421a-1, 421a-2) aufweist, der so ausgebildet ist, dass er von dem Scheibenabschnitt (421) nach unten in Richtung der Nabe (45) abragt, sowie einen Verbindungswulst (421b), der so ausgebildet ist, dass er zusätzlich von dem Verstärkungswulst (421a-1, 421a-2) nach unten abragt, und
das Durchgangsloch (421bh) durch den Verbindungswulst (421b) hindurch ausgebildet ist;
wobei die untere Ausgleichsvorrichtung (44) eine Befestigungslasche (442b) aufweist, die sich radial nach innen erstreckt und ein Verbindungsloch (442bh) aufweist, wobei der Verbindungswulst (421b) zumindest teilweise in das Verbindungsloch (442bh) eingesetzt ist.

2. Waschmaschine (100) nach Anspruch 1, wobei die Nabe (45) ein Befestigungsloch (453h) mit einem Innengewinde aufweist, das mit dem Außengewinde des Körperabschnitts (RS) verschraubt ist,
wobei in einem Zustand, in dem der Verbindungswulst (421b) in das Verbindungsloch (442bh) eingesetzt ist, wenn das Außengewinde des Körperabschnitts (RS) und das Innengewinde des Befestigungslochs (453h) zusammengeschraubt sind, der Kopfabschnitt (RH) dazu ausgelegt ist, eine obere Fläche des Verbindungswulstes (421b) anzudrücken, so dass eine untere Fläche des Verbindungswulstes (421b) in direktem Kontakt mit einer äußeren Fläche der Nabe (45) steht, so dass die gleichzeitige Befestigung zwischen der Wannenbasis (42), der unteren Ausgleichsvorrichtung (44) und der Nabe (45) abgeschlossen ist.

3. Waschmaschine (100) nach Anspruch 2, wobei ein radial inneres Ende der Befestigungslasche (442b) mit einer geneigten Fläche versehen ist, die in Kontakt mit der unteren Fläche des Verbindungswulstes (421b) steht und in ihrer Form der unteren Fläche des Verbindungswulstes (421b) entspricht.

4. Waschmaschine (100) nach Anspruch 2, ferner umfassend eine Unterlegscheibe, die zwischen dem Kopfabschnitt (RH) und der oberen Fläche des Verbindungswulstes (421b) angeordnet ist, um ein Lösen des Befestigungsbolzens (R) zu verhindern.

5. Waschmaschine (100) nach Anspruch 2, wobei der Verstärkungswulst (421a-1, 421a-2) so ausgebildet ist, dass er in eine erste Tiefe (d1) von dem Scheibenabschnitt (421) abragt,
der Verbindungswulst (421b) so ausgebildet ist, dass er in eine zweite Tiefe (d2) von dem Verstärkungswulst (421a-1, 421a-2) abragt,
wobei die zweite Tiefe (d2) geringer ist als die erste Tiefe (d1).

6. Waschmaschine (100) nach Anspruch 5, wobei in einem Zustand, in dem die gleichzeitige Befestigung zwischen der Wannenbasis (42), der unteren Ausgleichsvorrichtung (44) und der Nabe (45) abgeschlossen ist, eine Höhe (h1) von einer oberen Bodenfläche des Verbindungswulstes (421b) zu einer oberen Fläche des Kopfabschnitts (RH) geringer ist als eine Summe der ersten Tiefe (d1) und der zweiten Tiefe (d2).

7. Waschmaschine (100) nach Anspruch 5, wobei in einem Zustand, in dem die gleichzeitige Befestigung zwischen der Wannenbasis (42), der unteren Ausgleichsvorrichtung (44) und der Nabe (45) abgeschlossen ist, eine Höhe (h1) von einer oberen Bodenfläche des Verbindungswulstes (421b) zu einer oberen Fläche des Kopfabschnitts (RH) geringer ist als die erste Tiefe (d1).

8. Waschmaschine (100) nach Anspruch 5, wobei eine Länge des Kopfabschnitts (RH) in einer Längsrichtung des Befestigungsbolzens (R) geringer ist als die zweite Tiefe (d2).

9. Waschmaschine (100) nach Anspruch 7 oder 8, wobei der Kopfabschnitt (RH) in direktem Kontakt mit der oberen Bodenfläche des Verbindungswulstes (421b) steht.

10. Waschmaschine (100) nach Anspruch 1, ferner umfassend eine obere Ausgleichsvorrichtung (43), die an ein oberes Ende der Trommel (41) befestigt ist,
wobei die obere Ausgleichsvorrichtung (43) und die untere Ausgleichsvorrichtung (44) Flüssigkeitsausgleichsvorrichtungen sind.

## Revendications

1. Lave-linge (100) comprenant :
un tambour (41), dans lequel du linge est logé ;
une base de cuve (42), qui est fixée à une extrémité inférieure du tambour (41) ;
un dispositif d'équilibrage inférieur (44), qui est couplé à une surface circonférentielle extérieure de la base de cuve (42) et est configuré pour réduire des vibrations générées lorsque le tambour (41) tourne ;
un moyeu (45), qui est couplé à une surface extérieure inférieure de la base de cuve (42) et est disposé radialement à l'intérieur du dispositif d'équilibrage inférieur (44) ; et
au moins un élément de fixation intégré, qui est configuré pour fixer simultanément la base de cuve (42), le dispositif d'équilibrage inférieur (44) et le moyeu (45) les uns aux autres ;
dans lequel l'élément de fixation intégré comporte un boulon de fixation (R), qui comporte une partie de tête (RH) et une partie de corps (RS) formée d'un seul tenant avec la partie de tête (RH) et présentant un filetage mâle sur une surface circonférentielle extérieure de celle-ci ;
dans lequel la base de cuve (42) comporte une partie de disque (421) présentant un trou traversant (421bh), à travers lequel la partie de corps (RS) passe ; et
dans lequel la base de cuve (42) comporte un bourrelet de renforcement (421a-1, 421a-2) formé pour faire saillie vers le bas depuis la partie de disque (421) vers le moyeu (45), et un bourrelet de raccordement (421b) formé pour faire saillie en supplément vers le bas depuis le bourrelet de renforcement (421a-1, 421a-2), et
le trou traversant (421bh) est formé à travers la bourrelet de raccordement (421b) ;
dans lequel le dispositif d'équilibrage inférieur (44) comporte une patte de fixation (442b), qui s'étend radialement vers l'intérieur et comporte un trou de raccordement (442bh), le bourrelet de raccordement (421b) est au moins en partie inséré dans le trou de raccordement (442bh).

2. Lave-linge (100) selon la revendication 1, dans lequel le moyeu (45) comporte un trou de fixation (453h) présentant un filetage femelle vissé au filetage mâle de la partie de corps (RS),
dans un état, dans lequel le bourrelet de raccordement (421b) est inséré dans le trou de raccordement (442bh), lorsque le filetage mâle de la partie de corps (RS) et le filetage femelle du trou de fixation (453h) sont vissés ensemble, la partie de tête (RH) est configurée pour presser une surface supérieure du bourrelet de raccordement (421b) de telle sorte qu'une surface inférieure du bourrelet de raccordement (421b) est en contact direct avec une surface extérieure du moyeu (45) de telle sorte que la fixation simultanée entre la base de cuve (42), le dispositif d'équilibrage inférieur (44) et le moyeu (45) est terminée.

3. Lave-linge (100) selon la revendication 2, dans lequel une extrémité radialement intérieure de la patte de fixation (442b) est pourvue d'une surface inclinée, qui est en contact avec la surface inférieure du bourrelet de raccordement (421b), et correspond à une forme de la surface inférieure du bourrelet de raccordement (421b).

4. Lave-linge (100) selon la revendication 2, comprenant en outre une rondelle, qui est disposée entre la partie de tête (RH) et la surface supérieure du bourrelet de raccordement (421b) pour empêcher le desserrage du boulon de fixation (R).

5. Lave-linge (100) selon la revendication 2, dans lequel le bourrelet de renforcement (421a-1, 421a-2) est formé pour faire saillie à une première profondeur (d1) à partir de la partie de disque (421),
le bourrelet de raccordement (421b) est formé pour faire saillie à une deuxième profondeur (d2) depuis le bourrelet de renforcement (421a-1, 421a-2),
la deuxième profondeur (d2) est inférieure à la première profondeur (d1).

6. Lave-linge (100) selon la revendication 5, dans lequel dans un état, dans lequel la fixation simultanée entre la base de cuve (42), le dispositif d'équilibrage inférieur (44) et le moyeu (45) est achevée, une hauteur (h1) depuis une surface inférieure supérieure du bourrelet de raccordement (421b) à une surface supérieure de la partie de tête (RH) est inférieure à une somme de la première profondeur (d1) et de la deuxième profondeur (d2).

7. Lave-linge (100) selon la revendication 5, dans lequel dans un état, dans lequel la fixation simultanée entre la base de cuve (42), le dispositif d'équilibrage inférieur (44) et le moyeu (45) est achevée, une hauteur (h1) depuis une surface inférieure supérieure du bourrelet de raccordement (421b) à une surface supérieure de la partie de tête (RH) est inférieure à la première profondeur (d1).

8. Lave-linge (100) selon la revendication 5, dans lequel une longueur de la partie de tête (RH) dans une direction longitudinale du boulon de fixation (R) est inférieure à la deuxième profondeur (d2).

9. Lave-linge (100) selon la revendication 7 ou 8, dans lequel la partie de tête (RH) est en contact direct avec la surface inférieure supérieure du bourrelet de raccordement (421b).

10. Lave-linge (100) selon la revendication 1, comprenant en outre un dispositif d'équilibrage supérieur (43) fixé à une extrémité supérieure du tambour (41),
dans lequel le dispositif d'équilibrage supérieur (43) et le dispositif d'équilibrage inférieur (44) sont des dispositifs d'équilibrage à fluide.
